# EUROPÄISCHE PATENTSCHRIFT

(11) **EP 2 572 563 B1**
(45) Veröffentlichungstag und Bekanntmachung des Hinweises auf die Patenterteilung: **21.12.2016**
(21) Anmeldenummer: 12184788.3
(22) Anmeldetag: 18.09.2012
(51) Int. Cl.: A01B 19/02, A01B 23/02

(54) **Federzahnegge**
Spring-tooth harrow
Herse canadienne

(30) Priorität: 24.09.2011 DE 202011106097 U
(43) Veröffentlichungstag der Anmeldung: 27.03.2013
(73) Patentinhaber: Treffler, Paul, 86554 Pöttmes-Echsheim (DE)
(72) Erfinder: Treffler, Paul, 86554 Pöttmes-Echsheim (DE)
(74) Vertreter: Charrier Rapp & Liebau

(56) Entgegenhaltungen:
- AU-A- 2 987 277
- DE-B- 1 203 033
- DE-B- 1 457 693
- DE-C- 227 114
- GB-A- 946 723
- US-A- 1 982 862
- US-A- 3 493 055
- "SMULDREX Kulturegge", D. L. G. FRANKFURT,, 8. Mai 1966 (1966-05-08), XP001270311,

## Beschreibung

Die Erfindung betrifft eine Federzahnegge nach dem Oberbegriff des Anspruchs 1.

Federzahneggen können in der Landwirtschaft für eine Vielzahl unterschiedlicher Bearbeitungsaufgaben eingesetzt werden. So kann z.B. Unkrautsamen vor der Aussaat mobilisiert und zum Keimen angeregt werden. Bei schlechter Strohverteilung durch einen Mähdrescher kann das Stroh mit Hilfe einer Federzahnegge außerdem bei einer Überfahrt schräg zur Mähdrescherspur gleichmäßiger verteilt werden. Ferner können nach einer Bodenbearbeitung durch einen Grubber mit Gänsefußscharen die abgeschnittenen Unkräuter mit der Federzahnegge nach oben zum Trocknen abgelegt oder die Grasnarbe gewendet und getrocknet werden. Die üblicherweise verwendeten Federzahneggen weisen in der Regel einen an ein Zugfahrzeug ankuppelbaren und mit Stützrädern versehenen Tragrahmen auf, an dem mehrere Reihen von Federzinken angeordnet sind. Bei den bekannten Federzahneggen sind die Federzinken oftmals in Form von Spiralfedern ausgeführt oder über Spiralfedern an dem Grundrahmen befestigt. Dies hat jedoch den Nachteil, dass die Federzinken seitlich ausweichen können und dadurch unbearbeitete Streifen hinterlassen.

Aus der DE 1 557 735 A ist eine Federzahnegge mit einem Träger bekannt, der an einen Traktor angeschlossen werden kann und eine Halterung für Eggenzinken bildet. Die Eggenzinken sind in Art einer Spiralfeder aus einem bandförmigen Federstahl hergestellt.

Aus der DE 1 203 033 ist eine Federzahnegge mit einem Tragrahmen bekannt, an dem mehrere nebeneinander liegende Federzinken befestigt sind. Die Federzinken weisen ein als Blattfeder mit mehreren Federblättern ausgeführtes oberes Federteil und ein gebogenes Unterteil mit einer an dessen unterem Ende lösbar befestigten Zinkenspitze auf.

Aufgabe der Erfindung ist es, eine Federzahnegge der eingangs genannten Art zu schaffen, die eine präzisere und gleichmäßigere Bodenbearbeitung ermöglicht

Diese Aufgabe wird durch eine Federzahnegge mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Federzahnegge weisen die an einem Tragrahmen befestigten Federzinken ein als Flachstahl- oder Blattfeder mit mehreren Federblättern ausgeführtes oberes Federteil und ein gebogenes Unterteil mit einer an dessen unterem Ende befestigten Zinkenspitze auf. Durch das als Flachstahl- oder Blattfeder ausgeführte obere Federteil weisen die Federzinken eine hohe Seitenstabilität auf und weichen auch beim Auftreffen auf Widerstände nicht ohne weiteres zur Seite aus, wodurch eine gleichmäßige Bodenbearbeitung ohne Bearbeitungsfehlstreifen gewährleistet werden kann. Zudem weist das gebogene Unterteil einen im Wesentlichen V-förmigen Querschnitt auf. Die Federzahnegge ist besonders gut für den biologischen Anbau geeignet, um z.B. vor der Saat möglichst viele Unkrautsamen zum Keimen zu bringen. Diese werden dann wieder bei der Saat vernichtet.

In zweckmäßiger Weise sind die Federblätter des oberen Federteils an ihrem oberen Ende über eine Halterung am Tragrahmen befestigt. Die Halterung kann auf einfache und kostengünstige Weise z.B. aus zwei über Schrauben miteinander verbundenen Halteplatten bestehen. Dadurch können die Federblätter des als Blattfeder ausgeführten Federteils einfach und dennoch stabil an einem Querträger des Tragrahmens befestigt werden.

Die Halterung für die Befestigung der Federblätter des oberen Federteils am Tragrahmen ist vorzugsweise derart angeordnet, dass sie in Zugrichtung der Federzahnegge gesehen vor der Zinkenspitze liegt. Dies führt dazu, dass die Federzinken sofort nach oben ausgelenkt werden, wenn sie durch den Bodenwiderstand nach hinten gedrückt werden. Dadurch wird eine gleichmäßige Tiefenführung (Zugwiderstandsregelung) gewährleistet.

Das gebogene Unterteil ist zweckmäßigerweise über Schrauben oder andere Befestigungselemente an dem als Blattfeder ausgeführten oberen Federteil lösbar befestigt. Auch die Zinkenspitze ist lösbar an dem gebogenen Unterteil angeordnet. Dadurch können die Teile bei Bedarf einfach ausgetauscht werden.

Wird beispielsweise eine hohe Festigkeit oder ein geringer Montageaufwand angestrebt, so kann es jedoch auch vorteilhaft sein, eines der Federblätter des oberen Federteils mit dem gebogenen Unterteil einstückig auszuführen. Das oder die weiteren Federblätter können zudem einen sich in Richtung der Zinkenspitze verjüngenden Querschnitt aufweisen. Hierdurch wird ein gleichmäßiger Übergang des Flächenträgheitsmoments über das Ende des oder der weiteren Federblätter hinweg erreicht.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Federzahnegge in einer Seitenansicht;
- **Figur 2**: einen Federzinken in einer Vorderansicht;
- **Figur 3**: den Federzinken von Figur 2 in einer Seitenansicht;
- **Figur 4**: eine weitere Ausführungsform des Federzinkens in einer Seitenansicht und
- **Figur 5**: die Ausführungsform aus Figur 4 in einer perspektivischen Ansicht.

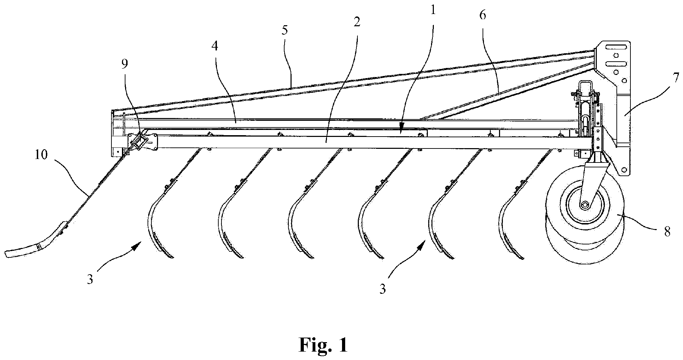

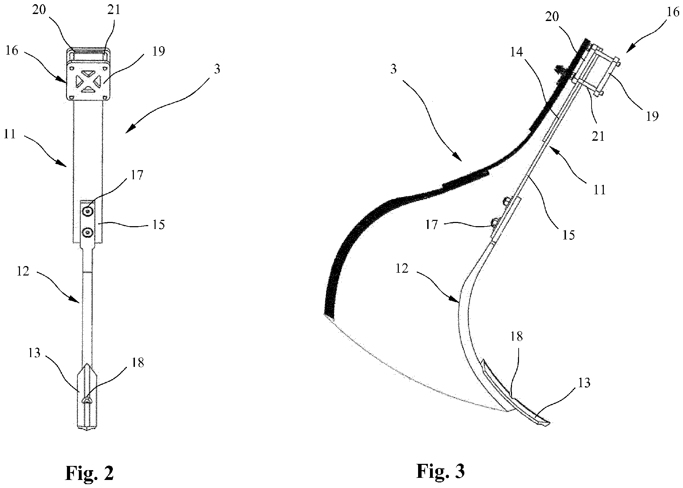

Die in Figur 1 in einer Seitenansicht schematisch dargestellte Federzahnegge enthält einen z.B. aus Rechteckprofilrohren hergestellten Tragrahmen 1 aus Längsträgern 2 und nicht erkennbaren Querträgern, an denen mehrere nebeneinander liegende, in den Figuren 2 und 3 gesondert dargestellte, Federzinken 3 befestigt sind. Der Tragrahmen 1 ist über eine aus Längsstützen 4 und Schrägstützen 5 bzw. 6 gebildete Stützkonstruktion an einem Träger 7 abgestützt. Über den Träger 7 kann der Tragrahmen 1 mit den daran befestigten Federzinken 3 an einen Traktor oder ein anderes Zugfahrzeug angekoppelt werden. Der Tragrahmen ist zweckmäßigerweise in einer Höhe von 70 cm angeordnet. Durch diesen hohen Durchgang wird die Verstopfungsneigung verringert.

In der gezeigten Ausführung enthält der Tragrahmen 1 der Federzahnegge sechs in Zugrichtung hintereinander angeordnete Querträger, an denen mehrere, quer zur Zugrichtung in einem Strichabstand von vorzugsweise 8 cm beabstandete Federzinken 3 befestigt sind. An dem Tragrahmen 1 sind in der Höhe verstellbare Stützräder 8 angebracht. Außerdem sind an einem Querträger 9 am Ende des Tragrahmens 1 an sich bekannte Zustreicher 10 befestigt.

Im den Figuren 2 und 3 ist eine der bei der Federzahnegge von Figur 1 verwendeten Federzinken 3 in einer Vorder- und Seitenansicht dargestellt. Der gezeigte Federzinken 3 weist ein als Flachstahl- oder Blattfeder ausgeführtes oberes Federteil 11 und ein gebogenes Unterteil 12 mit einer an dessen unteren Ende lösbar befestigten Zinkenspitze 13 auf. Das obere Federteil 11 besteht aus zwei oder mehreren übereinander liegenden Federblättern 14 und 15, die an ihrem oberen Ende über eine Halterung 16 an einem Querträger des in Figur 1 gezeigten Tragrahmens 1 befestigt sind. Bei der gezeigten Ausführung weist das als Blattfeder ausgeführtes oberes Federteil 11 ein kürzeres oberes Federblatt 14 und ein längeres unteres Federblatt 15 auf. Am unteren Ende des längeren unteren Federblatts 15 ist das verbreiterte obere Ende des stabilen gebogenen Unterteils 12 über Schrauben 17 oder andere Befestigungselemente lösbar fixiert. Die Zinkenspitze 13 ist über eine Schraube 18 oder ein anderes Befestigungselement am unteren Ende des gebogenen Unterteils 12 lösbar befestigt. Durch das als Flachstahl- oder Blattfeder ausgeführte obere Federteil 11 weist der Federzinken 3 eine hohe Seitenstabilität auf und wird bei einer Auslenkung in eine schwarz dargestellte obere Schwenkstellung auch ohne große seitliche Abweichungen wieder in die in Strichdarstellung dargestellte untere Ausgangslage zurückgestellt.

In Figur 3 ist erkennbar, dass die Halterung 16 für die Befestigung des oberen Federteils 11 an dem Querträger des Tragrahmens 1 in Zugrichtung der Federzahnegge vor der Zinkenspitze 13 liegt. Dies führt dazu, dass der Federzinken 3 sofort nach oben ausgelenkt wird, wenn er durch den Bodenwiderstand nach hinten gedrückt wird. Dadurch wird eine gleichmäßige Tiefenführung (Zugwiderstandsregelung) gewährleistet.

Die Halterung 16 besteht aus zwei parallelen Halteplatten 19 und 20, die durch Schrauben 21 gegeneinander verspannt werden können. Über die beiden Halteplatten 19 und 20 können die Federblätter 14 und 15 des als Blattfeder ausgeführten Federteils 11 auf einfache und dennoch stabile Weise an einem Querträger befestigt werden.

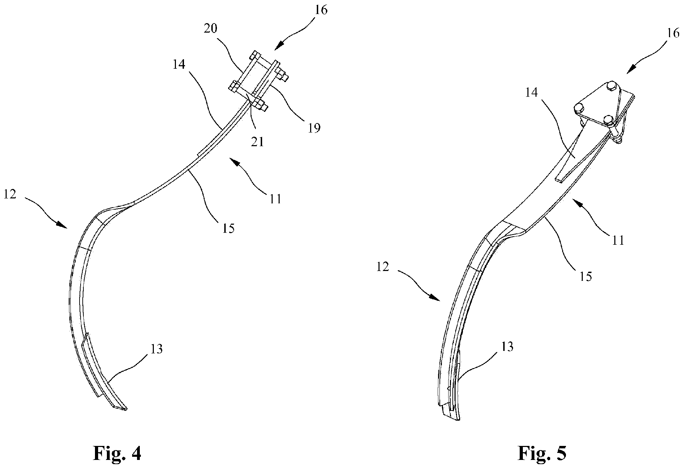

In Figur 4 und 5 ist eine zweite Ausführungsform der Striegelzinke gezeigt. Diese Ausführungsform entspricht zu einem großen Teil der vorherigen Ausführungsform, weshalb nur auf Unterschiede eingegangen wird. So ist bei dieser zweiten Ausführungsform das Federblatt 15 des oberen Federteils 11 und das gebogene Unterteil 12 einstückig ausgeführt. Eine so gestaltete Striegelzinke weist eine besonders hohe Stabilität auf und ist aufgrund der reduzierten Anzahl an Komponenten einfacher und schneller zu montieren. Wie in der Figur 5 gezeigt, ist die Striegelzinke dabei aus einem Flachstahl hergestellt, welcher im gebogenden Unterteil 12 zu einem V-förmigen Querschnitt umgeformt ist. Hierdurch ergibt sich in Zugrichtung im oberen Federteil 11 ein geringes Flächenträgheitsmoment und damit eine gute Federwirkung und im Bereich des gebogenen Unterteils 12 ein hohes Flächenträgheitsmoment und damit eine besonders hohe Steifigkeit.

Das weitere Federblatt 14 erhöht die Steifigkeit und die Federkraft der Striegelzinke im oberen Federteil 11. Die Breite des weiteren Federblatts 14 verjüngt sich dabei in Richtung der Zinkenspitze 13, so dass ein sehr gleichmäßiger Übergang der Federkraft erreicht wird. Ohne diese Verjüngung würde an dem der Zinkenspitze zugewandten Ende des weiteren Federblatts 14 das Flächenträgheitsmoment des durch die Federblätter 14 und 15 gebildeten Federpaktes abrupt abnehmen. Dies hätte zur Folge, dass die Blattfeder 15 an dieser Übergangsstelle starken Verformungen ausgesetzt wäre und schnell brechen würde. Durch die beschriebene Ausgestaltung des Federblatts 14 wird dies jedoch zuverlässig verhindert.

Die Zinkenspitze 13 ist in ihrem Querschnitt dem gebogenen Unterteil 12 derart angepasst, dass diese vorzugsweise vollflächig auf dem im Querschnitt V-förmigen Unterteil 12 aufliegt. Diese vollflächige Auflage und eine V-förmige Ausgestaltung sowohl der Zinkenspitze 13 als auch des Unterteils 12 ermöglichen eine besonders gute Abstützung und Ausrichtung der Zinkenspitze 13 und damit eine hohe Führungsstabilität und einen guten Geradesauslauf der Striegelzinke.

## Patentansprüche

1. Federzahnegge mit einem Tragrahmen (1), an dem mehrere nebeneinander liegende Federzinken (3) befestigt sind, die ein als Flachstahl- oder Blattfeder mit mehreren Federblättern (14, 15) ausgeführtes oberes Federteil (11) und ein gebogenes Unterteil (12) mit einer an dessen unterem Ende lösbar befestigten Zinkenspitze (13) aufweisen, **dadurch gekennzeichnet, dass** das gebogene Unterteil (12) einen im Wesentlichen V-förmigen Querschnitt aufweist.

2. Federzahnegge nach Anspruch 1, **dadurch gekennzeichnet, dass** die Federblätter (14, 15) an ihrem oberen Ende über eine Halterung (16) am Tragrahmen (1) befestigt sind.

3. Federzahnegge nach Anspruch 2, **dadurch gekennzeichnet, dass** die Halterung (16) für die Befestigung der Federblätter (14, 15) des oberen Federteils (11) am Tragrahmen (1) in Zugrichtung der Federzahnegge gesehen vor der Zinkenspitze (13) liegt.

4. Federzahnegge nach Anspruch 2 oder 3, **dadurch gekennzeichnet, dass** die Halterung (16) aus zwei über Schrauben (21) miteinander verbundenen Halteplatten (19, 20) besteht.

5. Federzahnegge nach einem der Ansprüche 1 bis 4, **dadurch gekennzeichnet, dass** das gebogene Unterteil (12) über Schrauben (17) oder andere Befestigungselemente lösbar mit dem oberen Federteil (11) verbunden ist.

6. Federzahnegge nach einem der Ansprüche 1 bis 4, **dadurch gekennzeichnet, dass** das gebogene Unterteil (12) einstückig mit einem der Federblätter (15) des oberen Federteils (11) ausgeführt ist.

7. Federzahnegge nach einem der Ansprüche 1 bis 6, **dadurch gekennzeichnet, dass** eines oder mehrere der Federblätter (14) einen in Richtung der Zinkenspitze (13) sich verjüngenden Querschnitt aufweist.

8. Federzahnegge nach einem der Ansprüche 1 bis 7, **dadurch gekennzeichnet, dass** die Zinkenspitze (13) über eine Schraube (18) oder ein anderes Befestigungselement lösbar mit dem gebogenen Unterteil (12) verbunden ist.

9. Federzahnegge nach einem der Ansprüche 1 bis 8, **dadurch gekennzeichnet, dass** der Tragrahmen (1) mindestens sechs in Zugrichtung hintereinander angeordnete Querträger enthält, an denen mehrere quer zur Zugrichtung voneinander beabstandete Federzinken (3) angeordnet sind.

10. Federzahnegge nach einem der Ansprüche 1 bis 9, **dadurch gekennzeichnet, dass** an dem Tragrahmen (1) in der Höhe verstellbare Stützräder (8) angeordnet sind.

11. Federzahnegge nach einem der Ansprüche 1 bis 10, **dadurch gekennzeichnet, dass** an dem Tragrahmen (1) Zustreicher (10) befestigt sind.

## Claims

1. Spring-tooth harrow with a supporting frame (1) to which are attached several spring tines (3) located adjacent to each other, which have an upper spring portion (11) designed as a flat steel spring or leaf spring with several spring leaves (14, 15) and a bent lower portion (12) with a tine tip (13) releasably attached to its lower end, **characterised in that** the bent lower portion (12) has a substantially V-shaped cross-section.

2. Spring-tooth harrow according to claim 1, **characterised in that** the spring leaves (14, 15) are attached at their upper ends via a support (16) to the supporting frame (1).

3. Spring-tooth harrow according to claim 2, **characterised in that** the support (16) for fixing the spring leaves (14, 15) of the upper spring portion (11) to the supporting frame (1) is located in front of the tine tip (13) in the direction of towing of the spring-tooth harrow.

4. Spring-tooth harrow according to claim 2 or 3, **characterised in that** the support (16) consists of two holding plates (19, 20) connected to each other by screws (21).

5. Spring-tooth harrow according to any of claims 1 to 4, **characterised in that** the bent lower portion (12) is releasablyconnected to the upper spring portion (11) by screws (17) or other fastening elements.

6. Spring-tooth harrow according to any of claims 1 to 4, **characterised in that** the bent lower portion (12) is constructed in one piece with one of the spring leaves (15) of the upper spring portion (11).

7. Spring-tooth harrow according to any of claims 1 to 6, **characterised in that** one or more of the spring leaves (14) has a cross-section tapering in the direction of the tine tip (13).

8. Spring-tooth harrow according to any of claims 1 to 7, **characterised in that** the tine tip(13) is releasably connected to the bent lower portion (12) by a screw (18) or other fastening element.

9. Spring-tooth harrow according to any of claims 1 to 8, **characterised in that** the supporting frame (1) includes six cross beams arranged one behind the other in the direction of towing, to which are attached several spring tines (3) spaced apart from each other transversely to the direction of towing.

10. Spring-tooth harrow according to any of claims 1 to 9, **characterised in that** on the supporting frame (1) are arranged supporting wheels (8) of adjustable height.

11. Spring-tooth harrow according to any of claims 1 to 10, **characterised in that** attached to the supporting frame (1) are furrow closers (10).

## Revendications

1. Herse canadienne comprenant un châssis de support (1), au niveau duquel plusieurs griffes souples (3) situées les unes à côté des autres sont fixées, lesquels présentent une partie souple (11) supérieure réalisée sous la forme d'un ressort en acier plat ou d'un ressort à lames pourvu de plusieurs lames de ressort (14, 15) et une partie inférieure (12) cintrée pourvue d'une pointe de griffe (13) fixée de manière amovible au niveau de son extrémité inférieure, **caractérisée en ce que** la partie inférieure (12) cintrée présente une section transversale sensiblement en forme de V.

2. Herse canadienne selon la revendication 1, **caractérisée en ce que** les lames de ressort (14, 15) sont fixées, au niveau de leur extrémité supérieure, par l'intermédiaire d'une attache (16), au niveau du châssis de support (1).

3. Herse canadienne selon la revendication 2, **caractérisée en ce que** l'attache (16) pour la fixation des lames de ressort (14, 15) de la partie souple (11) supérieure au niveau du châssis de support (1) se situe, vue dans la direction de traction de la herse canadienne, devant la pointe de griffe (13).

4. Herse canadienne selon la revendication 2 ou 3, **caractérisée en ce que** l'attache (16) est constituée par deux plaques de maintien (19, 20) reliées l'une à l'autre par l'intermédiaire de vis (21).

5. Herse canadienne selon l'une quelconque des revendications 1 à 4, **caractérisée en ce que** la partie inférieure (12) cintrée est reliée de manière amovible, par l'intermédiaire de vis (17) ou d'autres éléments de fixation, à la partie souple (11) supérieure.

6. Herse canadienne selon l'une quelconque des revendications 1 à 4, **caractérisée en ce que** la partie inférieure (12) cintrée est réalisée d'un seul tenant avec l'une des lames de ressort (15) de la partie souple (11) supérieure.

7. Herse canadienne selon l'une quelconque des revendications 1 à 6, **caractérisée en ce qu'**une ou plusieurs des lames de ressort (14) présentent une section transversale se rétrécissant en direction de la pointe de griffe (13).

8. Herse canadienne selon l'une quelconque des revendications 1 à 7 **caractérisée en ce que** la pointe de griffe (13) est reliée de manière amovible, par l'intermédiaire d'une vis (18) ou d'un autre élément de fixation, à la partie inférieure (12) cintrée.

9. Herse canadienne selon l'une quelconque des revendications précédentes 1 à 8, **caractérisée en ce que** le châssis de support (1) contient au moins six supports transversaux disposés dans la direction de traction les uns derrière les autres, au niveau desquels sont disposées plusieurs griffes souples (3) espacées les unes des autres de manière transversale par rapport à la direction de traction.

10. Herse canadienne selon l'une quelconque des revendications 1 à 9, **caractérisée en ce que** des roues de soutien (8) réglables en hauteur sont disposées au niveau du châssis de support (1).

11. Herse canadienne selon l'une quelconque des revendications 1 à 10, **caractérisée en ce que** des organes de recouvrement (10) sont fixés au niveau du châssis de support (1).
